# EUROPÄISCHE PATENTSCHRIFT

(11) **EP 2 652 310 B1**
(45) Veröffentlichungstag und Bekanntmachung des Hinweises auf die Patenterteilung: **25.02.2015**
(21) Anmeldenummer: 11796702.6
(22) Anmeldetag: 14.12.2011
(51) Int. Cl.: F02M 61/18

(54) **KRAFTSTOFFEINSPRITZVENTIL FÜR BRENNKRAFTMASCHINEN**
FUEL INJECTION VALVE FOR INTERNAL COMBUSTION ENGINES
SOUPAPE D'INJECTION DE CARBURANT DESTINÉE À DES MOTEURS À COMBUSTION INTERNE

(30) Priorität: 17.12.2010 DE 102010063355
(43) Veröffentlichungstag der Anmeldung: 23.10.2013
(73) Patentinhaber: Robert Bosch GmbH, 70442 Stuttgart (DE)
(72) Erfinder: STUKE, Bernd, 71229 Leonberg (DE); NUDING, Michael, 70563 Stuttgart (DE)
(86) Internationale Anmeldenummer: PCT/EP2011/072754
(87) Internationale Veröffentlichungsnummer: WO 2012/080331

(56) Entgegenhaltungen:
- EP-A1- 1 059 437
- WO-A1-2006/040283
- DE-A1- 10 207 189
- DE-A1-102005 012 096
- GB-A- 1 293 088
- GB-A- 2 074 234
- JP-A- 7 063 061

## Beschreibung

### Stand der Technik

Die Erfindung betrifft ein Kraftstoffeinspritzventil für Brennkraftmaschinen, wie es beispielsweise zur Einspritzen von Kraftstoffen direkt in den Brennraum einer Brennkraftmaschine geeignet ist, insbesondere für selbstzündende, schnelllaufende Brennkraftmaschinen.

Die Erfindung geht dabei von einem Kraftstoffeinspritzventil für Brennkraftmaschinen aus, wie es aus der DE 10 2004 050 046 A1 bekannt ist. Dieses Kraftstoffeinspritzventil weist einen Ventilkörper auf, in dem eine kolbenförmige Ventilnadel längsverschiebbar angeordnet ist. Die Ventilnadel wirkt mit einem konusförmigen Ventilsitz zusammen und gibt dadurch einen Kraftstoffstrom frei oder unterbricht diesen, wodurch Kraftstoff mehreren Einspritzöffnungen gesteuert durch die Ventilnadel zugeführt wird. Die Einspritzöffnungen gehen dabei von einem Sackloch aus, das sich an den konischen Ventilsitz anschließt, wobei in aller Regel mehrere Einspritzöffnungen über den Umfang des Ventilkörpers verteilt angeordnet sind.

Die Sacklochdüsen verteilen den Kraftstoff gut über die verschiedenen Einspritzöffnungen, weisen jedoch den Nachteil auf, dass sich die Anzahl der Einspritzöffnungen nicht beliebig erhöhen lässt, ohne die mechanische Stabilität der Einspritzdüse zu beeinträchtigen. Dies setzt der Optimierung der Einspritzdüsen Grenzen: Einerseits ist es vorteilhaft, Einspritzöffnungen mit einem geringen Durchmesser zu haben, da dadurch eine bessere Zerstäubung des Kraftstoffs gewährleistet ist. Andererseits ist eine hohe Leistung, wie es heutige Brennkraftmaschinen aufweisen, unabdingbar, einen hohen Einspritzquerschnitt zur Verfügung zu stellen, um die erforderliche Kraftstoffmenge in der kurzen zur Verfügung stehenden Zeit in den Brennraum einbringen zu können, was eine große Anzahl von Einspritzöffnungen nötig macht. Es muss also ein Kompromiss zwischen dem Spritzlochdurchmesser und der Anzahl der Spritzlöcher gefunden werden.

Darüber hinaus ist zu berücksichtigen, dass das Volumen des Sacklochs möglichst klein gehalten werden muss. Ist das Volumen des Sacklochs jedoch zu klein, so kann die erforderliche Anzahl der Einspritzöffnungen nicht mehr im Ventilkörper ausgebildet werden, die zur Erreichung der erforderliche Leistung notwendig ist. Ein großes Sacklochvolumen bedeutet hingegen, dass auch nach dem Ende der Einspritzung Kraftstoff in den Brennraum gelangen kann. Da dieser Kraftstoff nicht mehr ausreichend zerstäubt wird, verbrennt er nur unvollständig und führt zu erhöhten Schadstoffemissionen.

Um dieses Problem der begrenzten Spritzlochanzahl zu lösen, ist es bekannt, die Einspritzöffnungen möglichst weit stromaufwärts im Sackloch anzuordnen, wo dessen Durchmesser noch relativ groß ist, da sich das Sackloch zum brennraumseitigen Ende des Ventilkörpers hin allmählich verjüngt. Durch diese Anordnung der Einspritzöffnungen lässt sich die erforderliche Anzahl von 6, 8 oder 10 Einspritzöffnungen im Ventilkörper ausbilden, ohne die Stabilität des Ventilskörpers zu gefährden.

Um das Volumen des Sacklochs noch weiter zu verkleinern wird die Ventilnadel so ausgebildet, dass sie teilweise in das Sackloch hineinragt, so dass die Ventilnadelspitze bis auf Höhe der Einspritzöffnungen reicht, wenn die Ventilnadel in ihrer Schließstellung, d. h. in Anlage am Ventilsitz ist. Dadurch überdeckt die Ventilnadel die Einspritzöffnungen zumindest teilweise. Dies ist solange kein Problem, wie die Ventilnadel exakt im Hochdruckraum des Ventilkörpers zentriert ist.

Dies ist jedoch nicht immer gewährleistet. Bei der Fertigung des Ventilkörpers, insbesondere durch den Härtungsprozess des Ventilsitzes und der Ventilnadelführung, kann es dazu kommen, dass die Ventilnadel ein relativ großes Spiel innerhalb des Ventilkörpers hat, so dass durch eine ungleichmäßige Anströmung oder durch sonstige Störungen, etwa die Verformung des Ventilkörpers durch das Verspannen gegen den Haltekörper, eine Desachsierung der Ventilnadel auftreten kann. Hierdurch wird die Ventilnadel aus ihrer mittigen Lage seitlich verrückt und ist bezüglich des konischen Ventilsitzes nichts mehr exakt zentriert.

Soll nur eine kleine Voreinspritzmenge eingespritzt werden, so durchfährt die Ventilnadel lediglich einen sehr kleinen Hub, der deutlich geringer ist als der Maximalhub, der bei der Haupteinspritzung notwendig ist. Ist die Ventilnadel nunmehr aus ihrer mittigen Position ausgelenkt, so verteilt sich der Kraftstoff nicht mehr gleichmäßig auf die Einspritzöffnungen, und es wird über einige Einspritzöffnungen viel Kraftstoff ausgespritzt, während andere Einspritzöffnungen keinen oder nur eine geringe Menge Kraftstoff in den Brennraum fördern.

Bei selbstzündenden Brennkraftmaschinen ist zur Verbesserung der Zündwilligkeit in aller Regel eine Glühstiftkerze vorgesehen, d. h. ein Heizelement befindet sich im Brennraum, um die Zündwilligkeit des Brennstoff-Luft-Gemisches zu verbessern, insbesondere bei kaltem Motor. Damit die Glühstiftkerze ihre Funktion erfüllen kann, muss Kraftstoff unmittelbar in ihre Nähe gebracht werden, was in der Regel dadurch geschieht, dass eine Einspritzöffnung des Kraftstoffeinspritzventils so ausgerichtet wird, dass der dadurch ausgespritzte Kraftstoff in die unmittelbare Nähe der Glühstiftkerze gelangt. Wenn nun gerade diese Einspritzöffnung durch die desachsierte Ventilnadel verdeckt wird, vermindert sich die Zündwilligkeit des Brennstoffgemisches beträchtlich und kann sogar dazu führen, dass gar keine Zündung stattfindet und unverbrannter Kraftstoff in das Abgassystem gelangt.

Aus dem Stand der Technik sind verschiedene Ansätze bekannt, um sicherzustellen, dass Kraftstoff stets in die Nähe der Glühstiftkerze gelangt. So ist aus der japanischen Offenlegungsschrift JP 2000-002116 A eine Glühstiftkerzenanordnung bekannt, bei der über einen entsprechenden Winkel zwischen der Glühstiftkerze und den austretenden Kraftstoffstrahlen eine Zündung stets gewährleistet werden soll. Darüber hinaus ist aus der DE 10 2004 032 818 A1 eine Anordnung von Glühstiftkerze und Kraftstoffeinspritzventil bekannt, bei der das Kraftstoffeinspritzventil Kraftstoffstrahlen mit unterschiedlichen Einspritzwinkeln ausstößt, wobei durch den unterschiedlichen Winkel sichergestellt sein soll, dass wenigstens ein Strahl stets in den Bereich der Glühstiftkerze gerät.

JP 07 063061 A offenbart eine einzelne Einspritzöffnung stromabwärts der Düsennadelspitze. Ein aus dieser Öffnung austretender Kraftstoffstrahl ist auf eine zentrale Brennraummulde gerichtet, um bei geringen Motorlasten die Entflammung zu gewährleisten. Bei hohen Motorlasten werden mehrere weitere im Sitzbereich der Ventilnadel angeordnete Einspritzöffnungen infolge des Ventilnadelhubs entdrosselt. Durch diese Einspritzöffnungen wird dann der Großteil des Kraftstoffs in eine äußere, die zentrale Brennraummulde umgebende, Brennraummulde eingespritzt.

Allen diesen Lösungen ist jedoch gemeinsam, dass sie das Problem der unterschiedlichen Kraftstoffverteilung aufgrund einer desachsierten Nadel nicht lösen.

### Offenbarung der Erfindung

Das erfindungsgemäße Kraftstoffeinspritzventil weist demgegenüber den Vorteil auf, dass eine gute Zündung und Verbrennung des Kraftstoffs im Brennraum einer Brennkraftmaschine auch bei einer desachsierten Ventilnadel stets sichergestellt ist, insbesondere während der Kaltstartphase. Dazu weist die Ventilnadel anschließend an den konischen Ventilsitz ein Sackloch auf, von dem eine einzelne Einspritzöffnung abgeht, die stromabwärts der Ventilnadelspitze angeordnet ist, so dass der Kraftstoff durch diese Einspritzöffnung auch bei einer desaxierten Ventilnadel stets ungehindert austreten kann. Die übrigen Einspritzöffnungen sind dagegen stromaufwärts der Ventilnadelspitze angeordnet und stellen sicher, dass die erforderliche Kraftstoffmenge in den Brennraum gelangt.

Durch die einzelne stromabwärts angeordnete Einspritzöffnung ist sichergestellt, dass stets Kraftstoff in einen gewünschten Bereich der Brennkraftmaschine gelangt, wo eine Zündung zuverlässig erfolgt. Da die Desachsierung der Ventilnadel auf die Gesamtmenge des aus den Einspritzöffnungen austretenden Kraftstoffs keinen nennenswerten Einfluss hat, erhält man so ein Kraftstoffeinspritzventil, das bei einer guten Zündwilligkeit stets die erforderliche Kraftstoffmenge in den Brennraum einbringt. Darüber hinaus lässt sich das Sackloch, da nur eine einzelne Einspritzöffnung stromabwärts an der Ventilnadelspitze abgeht, sehr klein gestalten, so dass die Kohlenwasserstoffemissionen gering gehalten werden können.

In einer ersten vorteilhaften Ausgestaltung gehen sämtliche Einspritzöffnungen von dem Sackloch aus. Das Volumen des Sacklochs wird dadurch gering gehalten, das die Ventilnadelspitze in das Sackloch hineinragt, wenn die Ventilnadel in ihrer Schließstellung ist.

In einer weiteren vorteilhaften Ausgestaltung gehen die Einspritzöffnungen, die stromaufwärts der Ventilnadelspitze angeordnet sind, direkt vom konischen Ventilsitz aus. In Schließstellung der Ventilnadel überdeckt die Ventilnadel somit die Einspritzöffnungen vollständig, so dass eine sogenannten Sitzlochdüse gebildet wird. Das ohnehin immer vorhandene Sackloch am stromabwärtigen Ende des konischen Ventilsitzes, das aus Fertigungsgründen stets vorhanden ist, wird zur Anordnung der einzelnen Einspritzöffnung genutzt, die einen Kraftstoffstrahl, den sogenannten Zündstrahl, in die Nähe der Glühstiftkerze bringen kann.

In einer weiteren vorteilhaften Ausgestaltung sind sämtliche Einspritzöffnungen, sowohl die stromaufwärts als auch die einzelne, stromabwärtige Einspritzöffnung so orientiert, dass der Auftreffpunkt der aus den Einspritzöffnungen austretenden Kraftstoffstrahlen in einem bestimmten Abstand um das Kraftstoffeinspritzventil auf einem gemeinsamen gedachten Kreis liegen. Dadurch lässt sich trotz der unterschiedlichen Anordnung bezüglich der Ventilnadelspitze der Kraftstoff gleichmäßig im Brennraum verteilen, so dass eine gleichmäßige Verbrennung in allen Bereichen des Brennraums stattfindet.

In einer weiteren vorteilhaften Ausgestaltung ist der Durchmesser der einzelnen Einspritzöffnung, durch die der Zündstrahl austritt, verschieden von dem Durchmesser der übrigen Einspritzöffnungen, um die Menge des Kraftstoffs und die Kraftstoffzerstäubung optimal steuern zu können. Da die Anströmung der einzelnen Einspritzöffnung stets gewährleistet ist, wird bei einem gleichen Durchmesser in aller Regel mehr Kraftstoff durch diese Einspritzöffnung ausströmen. Um dies zu kompensieren kann es beispielsweise vorgesehen sein, die einzelne Einspritzöffnung durch die der Zündstrahl ausgespritzt wird, mit einem kleineren Durchmesser auszugestalten wie die übrigen Einspritzöffnungen.

Weiterhin wird erfindungsgemäß eine Brennkraftmaschine mit einem Brennraum vorgeschlagen, in welchen eine Glühstiftkerze und ein erfindungsgemäßes Kraftstoffeinspritzventil ragen, wobei das Kraftstoffeinspritzventil so angeordnet ist, dass der Kraftstoff, der aus der einzelnen, stromabwärts der Ventilnadelspitze angeordneten Einspritzöffnung ausgespritzt wird, stets in die Nähe der Glühstiftkerze gebracht wird und so einen Zündstrahl bildet. Hierbei muss gegebenenfalls noch die Luftströmung innerhalb des Brennraumes berücksichtigt werden, da die Lufteinlassströmung häufig so gestaltet ist, dass die Luft im Brennraum in eine Rotationsbewegung versetzt wird.

### Zeichnung

In der Zeichnung ist ein erfindungsgemäßes Kraftstoffeinspritzventil und eine erfindungsgemäße Brennkraftmaschine dargestellt. Es zeigt
- Figur 1: einen Längsschnitt durch ein erfindungsgemäßes Kraftstoffeinspritzventil, wobei nur der brennraumseitige wesentliche Teil detailliert dargestellt ist,
- Figur 2: eine Vergrößerung von Figur 1 im Bereich des Ventilsitzes,
- Figur 3: ein weiteres Ausführungsbeispiel in der gleichen Darstellung wie Figur 2,
- Figur 4: schematisch einen Brennraum einer erfindungsgemäßen Brennkraftmaschine mit der Anordnung des Kraftstoffeinspritzventils und der Glühstiftkerze,
- Figur 5: eine Draufsicht auf den Brennraum der erfindungsgemäßen Brennkraftmaschine und
- Figur 6: zeigt ein erfindungsgemäßes Kraftstoffeinspritzventil und die Ausrichtung der entsprechenden Kraftstoffstrahlen.

### Beschreibung der Ausführungsbeispiele

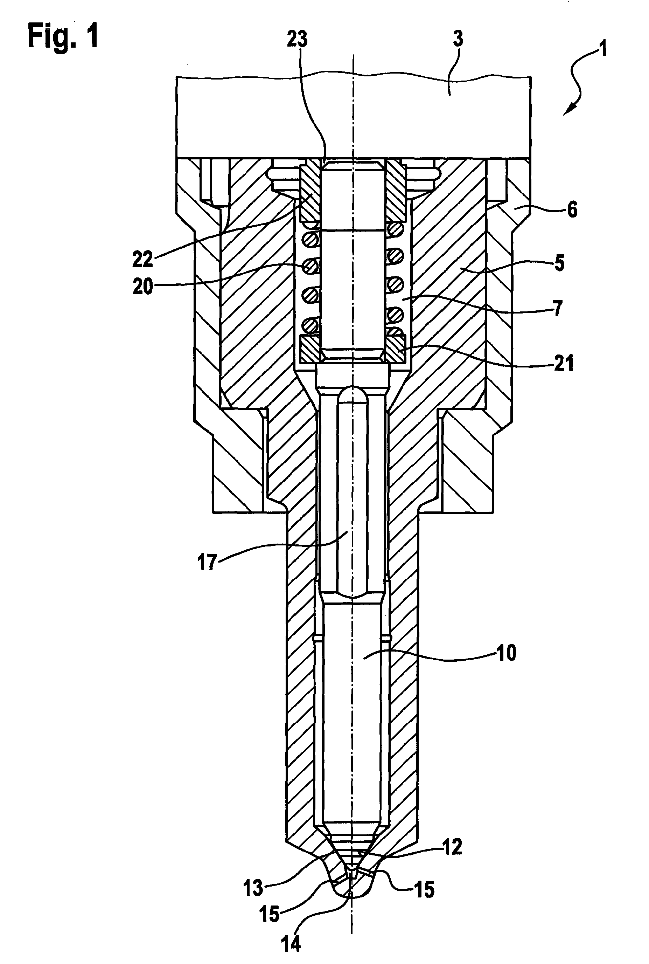

In Figur 1 ist ein erfindungsgemäßes Kraftstoffeinspritzventil 1 dargestellt. Das Kraftstoffeinspritzventil besteht aus einem Haltekörper 3 und einem Ventilkörper 5, wobei der Haltekörper 3 nur teilweise und schematisch dargestellt ist, während der Ventilkörper 5 im Längsschnitt gezeigt ist. Der Ventilkörper 5 ist mittels einer Spannmutter 6 gegen einen Haltekörper 3 verspannt und weist einen Druckraum 7 auf, der als Stufenbohrung ausgebildet ist und am brennraumseitigen Ende des Ventilkörpers 5 von einem konischen Ventilsitz 13 begrenzt wird. Der Ventilsitz 13 geht am äußersten Ende in ein Sackloch 14 über, von dem mehrere Einspritzöffnungen 15 ausgehen. Im Druckraum 7 ist eine kolbenförmige Ventilnadel 10 längsverschiebbar angeordnet, die in einem mittleren Bereich des Druckraums 7 geführt ist. Der Kraftstoffstrom im Bereich der Ventilnadelführung ist über mehrere Anschliffe 17 an der Ventilnadel 10 sichergestellt, wobei die Anschliffe 17 im Führungsbereich der Ventilnadel 10 ausgebildet sind.

Die Ventilnadel 10 weist an ihrem ventilsitzzugewandten Ende eine Ventildichtfläche 12 auf, mit der die Ventilnadel 10 mit dem Ventilsitz 13 zusammenwirkt, um den Kraftstoffstrom aus dem Druckraum 7 zu den Einspritzöffnungen 15 zu öffnen oder zu schließen. Am ventilsitzabgewandten Ende ist die Ventilnadel 10 in einer Hülse 22 geführt, wobei die Hülse 22 von einer Schließfeder 20, die die Ventilnadel 10 umgibt und die sich am hülsenabgewandten Ende an einem Stützring 21 abstützt, entgegen den Haltekörper 3 gedrückt wird. Durch die Hülse 22, die Ventilnadel 10 und den Haltekörper 3 wird ein Steuerraum 23 begrenzt, in dem sich durch ein geeignetes und aus dem Stand der Technik hinreichend bekanntes Steuerventil ein wechselnder Kraftstoffdruck einstellen lässt.

Die Funktionsweise des Kraftstoffeinspritzventils ist wie folgt: In den Druckraum 7 wird Kraftstoff unter hohem Druck eingeleitet, der dort ständig ansteht. Im Steuerraum 23 kann über ein hier nicht dargestellten Steuerventil ein wechselnder Kraftstoffdruck eingestellt werden, der zwischen dem Druck im Druckraum 7 und einem deutlich niedrigen Druck schwankt. Je nach Druck im Steuerraum 23 ergibt sich eine hydraulische Kraft auf die ventilsitzabgewandte Stirnseite der Ventilnadel 10, wodurch die Ventilnadel 10 gegen den Ventilsitz 13 gedrückt wird. Soll eine Einspritzung erfolgen, so wird der Druck im Steuerraum 23 erniedrigt, so dass durch die hydraulischen Kräfte auf Teile der Ventildichtfläche 12 und auf eine Schulter im Bereich der Anschliffe 17 eine hydraulische Kraft auf die Ventilnadel 10 ausgeübt wird, die diese vom Ventilsitz 13 wegdrückt, so dass zwischen der Ventildichtfläche 12 und dem Ventilsitz 13 ein Durchgangsquerschnitt aufgesteuert wird, durch den Kraftstoff aus dem Druckraum 7 zu den Einspritzöffnungen 15 strömen kann. Bei Druckerhöhung im Steuerraum 23 und einer entsprechenden hydraulischen Kraft auf die ventilsitzabgewandte Stirnseite der Ventilnadel 10 fährt die Ventilnadel 10 wieder in Anlage an den Ventilsitz 13 und verschließt die Einspritzöffnungen 15 bzw. das Sackloch 14 gegen den Druckraum 7.

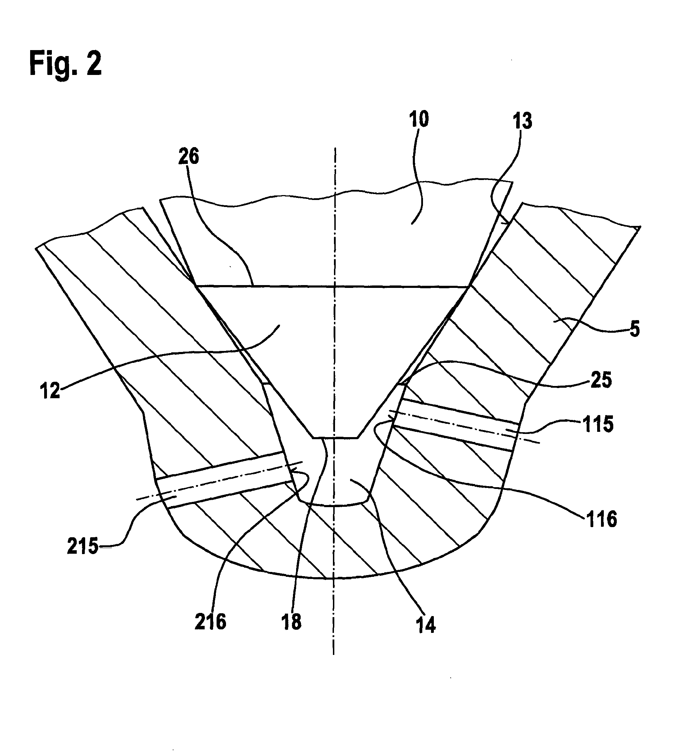

In Figur 2 ist der Bereich des Ventilsitzes von Figur 1 vergrößert dargestellt. Die Ventilnadel 10 weist an ihrem ventilsitzzugewandten Ende die Ventildichtfläche 12 auf, die hier als Doppelkegel ausgebildet ist, so dass zwischen den beiden Kegelflächen eine Dichtkante 26 gebildet wird, die in Anlage an den Ventilsitz 13 kommt und dadurch für eine gute Abdichtung sorgt. Das spitz zulaufende Ende der Ventilnadel 10 bildet eine Ventilnadelspitze 18, die bis in das Sackloch 14 ragt, und dadurch das mit Kraftstoff gefüllte Volumen des Sacklochs 14 vermindert. Das Sackloch 14 ist hierbei ebenfalls im Wesentlichen konisch und am brennraumseitigen Ende gerundet ausgebildet, wobei zwischen dem konischen Ventilsitz 13 und dem Sackloch 14 eine Kante 25 ausgebildet ist. Vom Sackloch 14 gehen mehrere Einspritzöffnungen 15 aus. Hierbei ist eine einzelne Einspritzöffnung 215 so weit stromabwärts der Ventilnadelspitze 18 angeordnet ist, dass die Ventilnadelspitze 18 stromaufwärts der Eintrittsöffnung 216 dieser Einspritzöffnung 215 angeordnet ist, wenn die Ventilnadel 10 in ihrer Schließstellung ist, d. h. in Anlage am Ventilsitz 13. Die übrigen Einspritzöffnungen 115 sind stromaufwärts der Ventilnadelspitze 18 angeordnet, so dass deren Eintrittsöffnungen 116 stromaufwärts der Ventilnadelspitze 18 angeordnet sind. Da sich das Sackloch 14 in Richtung des Brennraums verjüngt, ist der Durchmesser des Sacklochs 14 im Bereich der stromaufwärtigen Spritzlöcher 115 größer als am Grund des Sacklochs 14. Dadurch lässt sich in diesem Bereich eine große Anzahl von Einspritzöffnungen 115 bzw. Eintrittsöffnungen 116 anordnen, ohne die Stabilität des Ventilkörpers 5 in diesem Bereich zu beeinträchtigen.

Die Kraftstoffeinspritzung in den Brennraum einer Brennkraftmaschine geschieht in der Regel in mehreren Teileinspritzungen. Während eines Einspritzzyklus werden meist eine oder zwei Voreinspritzungen und dann eine Haupteinspritzung durchgeführt, in der die Hauptkraftstoffmenge in den Brennraum eingespritzt wird. Nachfolgend können noch eine oder mehrere Nacheinspritzungen vorgesehen sein, die ebenfalls nur wenig Kraftstoffvolumen in den Brennraum eintragen. Dieses Einspritzmuster dient hauptsächlich dazu, den Verbrennungsverlauf weicher zu machen und die Schadstoffemission zu minimieren.

Für eine Voreinspritzung durchfährt die Ventilnadel 10 nur einen sehr geringen Öffnungshub von wenigen Mikrometern, so dass und nur ein sehr kleiner Querschnitt zwischen dem Ventilsitz 13 und der Ventildichtfläche 12 aufgesteuert wird. Kommt es hier zu einer Desachsierung der Ventilnadel 10, d. h. zu einer Abweichung der Ventilnadel 10 aus der zentrischen Lage innerhalb des Druckraums 7, so erfolgt die Zuströmung in das Sackloch 14 nicht gleichmäßig über den gesamten Umfang, sondern einige Spritzlöcher 115 werden mit mehr Kraftstoff und andere mit weniger Kraftstoff versorgt. Demgegenüber wird das einzelne stromabwärtige Spritzloch 215 dadurch, dass es sich weiter unten im Spritzloch 14 befindet, stets voll mit Kraftstoff versorgt, unabhängig von einer vorhandenen Fehlstellung der Ventilnadel 10. Durch diese Anordnung der Spritzlöcher 115, 215 ist damit sichergestellt, dass sich einerseits eine große Anzahl von Einspritzöffnungen 115, 215 im Ventilkörper 5 anordnen lässt und andererseits zumindest das stromabwärtige Spritzloch 215 stets voll mit Kraftstoff versorgt wird.

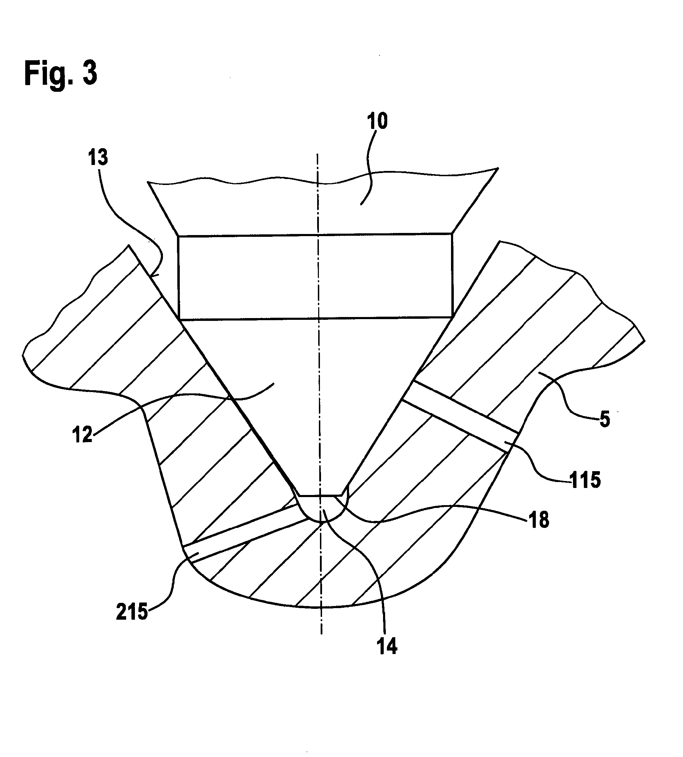

Figur 3 zeigt ein weiteres Ausführungsbeispiel des erfindungsgemäßen Kraftstoffeinspritzventils in der gleichen Darstellung wie Figur 2. Das hier gezeigte Kraftstoffeinspritzventil ist eine sogenannte Sitzlochdüse, bei der die Einspritzöffnungen 115 nicht vom Sackloch 14, sondern direkt vom Ventilsitz 13 ausgehen. Die Ventilnadel 10 weist eine kegelförmige Ventildichtfläche 12 auf, die in Schließstellung der Ventilnadel 10 direkt auf dem Ventilsitz 13 aufliegt und dadurch die Einspritzöffnungen 115 unmittelbar verschließt. Der Vorteil ist, dass bei geschlossenem Kraftstoffeinspritzventil die Einspritzöffnungen 115 mit keinem weiteren Volumen innerhalb des Kraftstoffeinspritzventils verbunden sind und somit nicht unkontrolliert Kraftstoff in den Brennraum nachtropfen kann, was bei der Verbrennung zu unerwünschten Kohlenwasserstoffemissionen führt, da dieser Kraftstoff nicht zerstäubt und damit nur unvollständig verbrannt wird.

Auch bei diesem Einspritzventil kann sich das Problem ergeben, dass bei einer desaxierten Ventilnadel 10, insbesondere bei nur geringem Ventilnadelhub, ein Teil der Einspritzöffnungen 115 nicht oder nicht voll mit Kraftstoff versorgt wird. Um wenigstens einen Kraftstoffstrahl stets zuverlässig mit Kraftstoff zu versorgen, ist das Sackloch 14, dass sich hier an den konischen Ventilsitz 13 anschließt, nur sehr klein ausgestaltet, jedoch so groß, dass eine Einspritzöffnung 215 von diesem Sackloch 14 abgehen kann. Da die Zuströmung in das Sackloch 14 stets sichergestellt ist, ergibt sich immer ein stabiler Strahl aus dem Spritzloch 215, während es unter Umständen zu einer ungleichen Verteilung des Kraftstoffs auf die übrigen Einspritzöffnungen 115 kommt.

Der Durchmesser der stromaufwärtigen Einspritzöffnungen 115 kann den gleichen Durchmesser aufweisen wie die stromabwärtige Einspritzöffnung 215, oder es kann auch ein unterschiedlicher Durchmesser vorgesehen sein. Dies hängt von den Anströmbedingungen, dem Winkel der Einspritzöffnungen mit der Längsachse des Einspritzventils und der gewünschten Verteilung des Kraftstoffs im Brennraum ab.

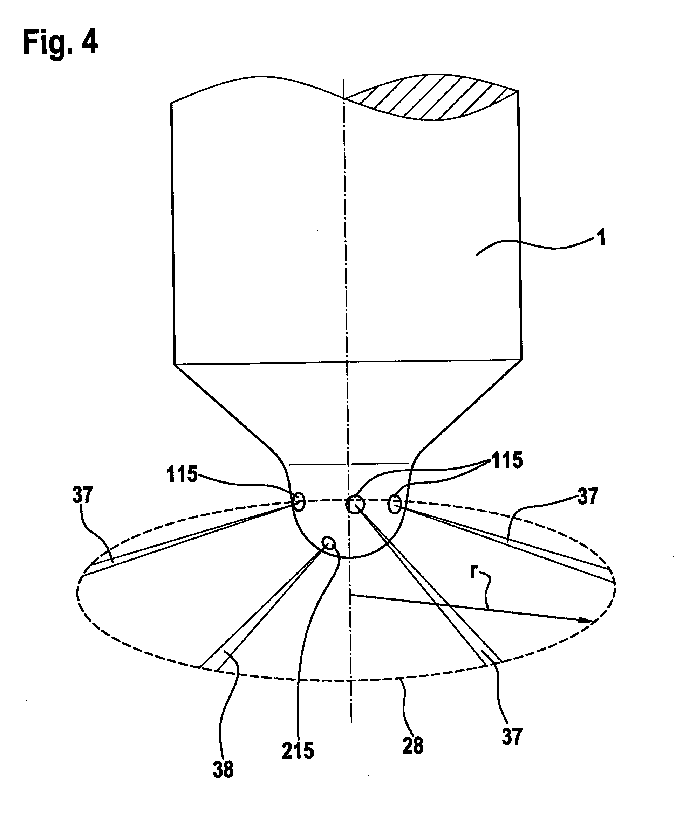

In Figur 4 ist ein erfindungsgemäßen Kraftstoffeinspritzventil nochmals von außen im Bereich des Ventilsitzes dargestellt. Zusätzlich sind hier die Einspritzstrahlen 37, 38 der einzelnen Einspritzöffnungen gezeichnet. Die Anordnung der Einspritzöffnungen 115, 215 ist vorzugsweise so gestaltet, dass in einem bestimmten Abstand R von der Mittelachse des Einspritzventils alle Einspritzstrahlen 37, 38 auf einem gemeinsamen, gedachten Kreis auftreffen. Der Durchmesser des Kreises R ist vorzugsweise auf die Größe der Kolbenmulde des Kolbens einer Brennkraftmaschine abgestimmt und entspricht ungefähr dem Durchmesser dieser Mulde. Die stromaufwärtigen Einspritzöffnungen 115 sind dabei vorzugsweise so ausgebildet, dass sie auf einem gemeinsamen, gedachten Kreiskegel liegen.

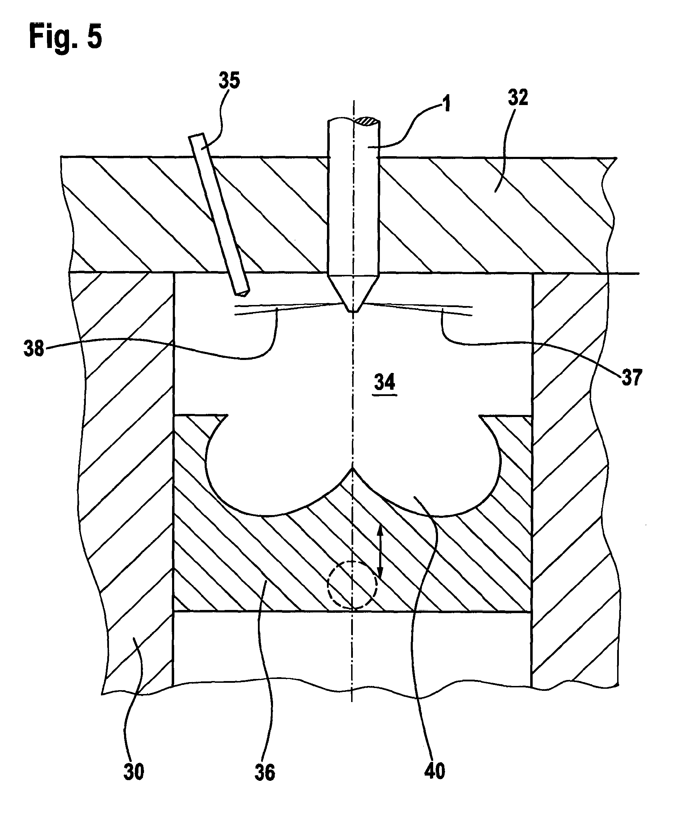

In Figur 5 ist schematisch ein Längsschnitt durch einen Brennraum einer Brennkraftmaschine dargestellt, wobei die Brennkraftmaschine einen Motorblock 30 und einen Zylinderkopf 32 aufweist und der Zylinderkopf 32 den Brennraum 34 begrenzt. Der Brennraum 34 ist als Bohrung im Motorblock 30 ausgeführt, wobei im Brennraum 34 ein Kolben 36 längsbewegbar angeordnet ist, der in der üblichen, bekannten Weise die Antriebskraft auf eine Kurbelwelle überträgt. Der Kolben 36 weist eine Kolbenmulde 40 auf, deren Durchmesser zumindest näherungsweise dem Durchmesser des Kreises 28 entspricht, auf dem die Auftreffpunkte sämtlicher Einspritzstrahlen 37, 38 gemäß Figur 4 angeordnet sind.

In den Brennraum 34 ragt eine Glühstiftkerze 35 und das Einspritzventil 1. Die Einspritzstrahlen 37, 38, die aus dem Einspritzventil 1 austreten, verteilen sich in dem Raum, der zwischen dem Zylinderkopf 32 und dem Kolben 36 verbleibt, und bilden mit dem dort befindlichen Sauerstoff ein zündfähiges Gemisch, das durch die Aufwärtsbewegung des Kolbens 36 verdichtet und dadurch gezündet wird.

Die Einspritzstrahlen 37, 38 des Einspritzventils 1 sind so angeordnet, dass der Einspritzstrahl 38, der durch die stromabwärtige Einspritzöffnung 215 austritt, einen Zündstrahl bildet, der stets in die Nähe der Glühstiftkerze 35 gebracht wird. Da hier eine besonders hohe Temperatur bedingt durch die Glühstiftkerze 35 herrscht, zündet das Kraftstoff-Luft-Gemisch hier besonders leicht, auch bei kalter Brennkraftmaschine. Die übrigen Einspritzstrahlen 37 verteilen sich über den Umfang des Einspritzventils, so dass der Kraftstoff ansonsten gleichmäßig im gesamten Brennraum 34 verteilt wird.

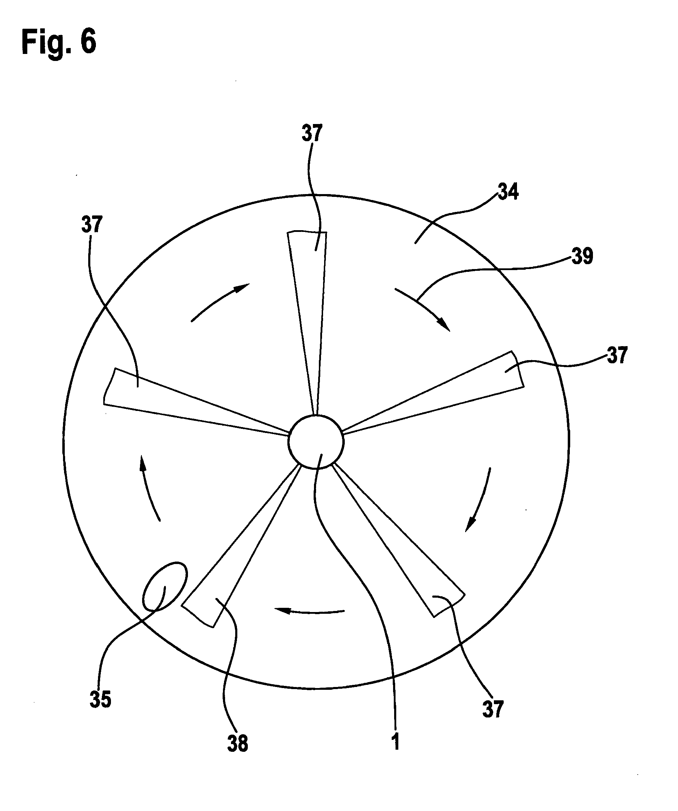

In Figur 6 ist nochmals der Brennraum 34 in einer Draufsicht dargestellt zusammen mit dem Einspritzventil 1 und den Einspritzstrahlen 37 und dem Zündstrahl 38. Die Abbildung zeigt eine mögliche Anordnung des Zündstrahls 38, wobei hier berücksichtigt werden muss, dass die Luftströmung 39 innerhalb des Brennraums 34 häufig einen Wirbel bildet, durch den die Kraftstoffstrahlen 37, 38 verweht werden. Bei der hier gezeigten Bewegungsrichtung 39 muss der Zündstrahl 38 knapp vor die Glühstiftkerze 35 ausgerichtet werden, damit er durch die Bewegungsrichtung der Luft im Brennraum 34 auf die Glühstiftkerze zu bewegt wird und so von der heißen Glühstiftkerze 35 gezündet wird.

## Patentansprüche

1. Kraftstoffeinspritzventil für Brennkraftmaschinen mit einem Ventilkörper (5), in dem ein Druckraum (7) ausgebildet ist, der an einem Ende von einem konischen Ventilsitz (13) begrenzt wird, an den sich ein Sackloch (14) anschließt, und mit einer im Druckraum (7) längsverschiebbar angeordneten Ventilnadel (10), die mit einer Ventildichtfläche (12) mit dem konischen Ventilsitz (13) zusammenwirkt zur Steuerung eines Kraftstoffflusses aus dem Druckraum (7) zu im Ventilkörper (5) ausgebildeten Einspritzöffnungen (15; 115; 215), wobei die Ventilnadel (10) dann, wenn Sie in Anlage am Ventilsitz (13) ist, mit einer Ventilnadelspitze (18) in das Sackloch (14) hineinragt, **dadurch gekennzeichnet, dass**
die Eintrittsöffnung (216) einer Einspritzöffnung (215) stromabwärts der Ventilnadelspitze (18) im Sackloch (14) angeordnet ist und die Eintrittsöffnungen (116) der übrigen Spritzlöcher (115) stromaufwärts der Ventilnadelspitze (18) angeordnet sind, wenn die Ventilnadel (10) in Anlage am Ventilsitz (13) ist,
wobei die stromabwärts der Ventilnadelspitze (18) angeordnete Einspritzöffnung (215) so angeordnet ist, dass der Auftreffpunkt eines aus dieser Einspritzöffnung (215) austretenden Kraftstoffstrahls auf einem gedachten Kreis mit einem bestimmten Abstand (r) von der Mittelachse des Einspritzventils liegt, auf dem auch die Auftreffpunkte aller anderen, durch die übrigen Einspritzöffnungen (115) austretenden Kraftstoffstrahlen liegen.

2. Kraftstoffeinspritzventil nach Anspruch 1, **dadurch gekennzeichnet, dass** sämtliche Einspritzöffnungen (15; 115; 215) von dem Sackloch (14) ausgehen.

3. Kraftstoffeinspritzventil nach Anspruch 1, **dadurch gekennzeichnet, dass** die stromaufwärts der Ventilnadelspitze (18) angeordneten Einspritzöffnungen (115) vom Ventilsitz (13) ausgehen.

4. Kraftstoffeinspritzventil nach Anspruch 1, **dadurch gekennzeichnet, dass** die stromaufwärts der Ventilnadelspitze (18) angeordneten Einspritzöffnungen (115) auf einer gemeinsamen Kegelfläche liegen.

5. Kraftstoffeinspritzventil nach Anspruch 1, **dadurch gekennzeichnet, dass** alle Einspritzöffnungen (115; 215) eine zylindrische Form aufweisen mit einem Durchmesser, wobei die stromabwärts der Ventilnadelspitze (18) angeordnete Einspritzöffnung (215) einen Durchmesser aufweist, der von den Durchmessern der übrigen Einspritzöffnungen (115) verschieden ist.

6. Kraftstoffeinspritzventil nach Anspruch 4, **dadurch gekennzeichnet, dass** alle stromaufwärts der Ventilnadelspitze (18) angeordneten Einspritzöffnungen (115) den gleichen Durchmesser aufweisen wie die stromabwärtige Einspritzöffnung (215).

7. Brennkraftmaschine mit einem Brennraum (34), in den eine Glühstiftkerze (35) und ein Kraftstoffeinspritzventil (1) mit den Merkmalen des Anspruchs 1 ragt, so dass der aus dem Kraftstoffeinspritzventil (1) ausgespritzte Kraftstoff im Brennraum (34) zur Zündung kommen kann,
**dadurch gekennzeichnet, dass**
der Kraftstoffstrahl, der von der stromabwärts der Ventilnadelspitze (18) angeordneten Einspritzöffnung (215) ausgespritzt wird, so ausgerichtet ist, dass der Kraftstoff in die Nähe der Glühstiftkerze (35) gebracht wird und so einen Zündstrahl bildet.

## Claims

1. Fuel injection valve for internal combustion engines, having a valve body (5) in which there is formed a pressure chamber (7) which, at one end, is delimited by a conical valve seat (13) which is adjoined by a blind bore (14), and having a valve needle (10) which is arranged in longitudinally displaceable fashion in the pressure chamber (7) and which, by way of a valve sealing surface (12), interacts with the conical valve seat (13) so as to control a flow of fuel from the pressure chamber (7) to injection openings (15; 115; 215) formed in the valve body (5), wherein the valve needle (10), when it is in contact with the valve seat (13), projects by way of a valve needle tip (18) into the blind bore (14),
**characterized in that**
the inlet opening (216) of one injection opening (215) is arranged in the blind bore (14) downstream of the valve needle tip (18), and the inlet openings (116) of the other spray holes (115) are arranged upstream of the valve needle tip (18) when the valve needle (10) is in contact with the valve seat (13), wherein the injection opening (215) arranged downstream of the valve needle tip (18) is arranged such that a fuel jet emerging from said injection opening (215) intersects an imaginary circle with a particular spacing (r) from the central axis of the injection valve, which imaginary circle is also intersected by all of the other fuel jets emerging through the other injection openings (115).

2. Fuel injection valve according to Claim 1, **characterized in that** all of the injection openings (15; 115; 215) extend from the blind bore (14).

3. Fuel injection valve according to Claim 1, **characterized in that** the injection openings (115) arranged upstream of the valve needle tip (18) extend from the valve seat (13).

4. Fuel injection valve according to Claim 1, **characterized in that** the injection openings (115) arranged upstream of the valve needle tip (18) lie on a common conical surface.

5. Fuel injection valve according to Claim 1, **characterized in that** all of the injection openings (115; 215) have a cylindrical form with a diameter, wherein the injection opening (215) arranged downstream of the valve needle tip (18) has a diameter which differs from the diameters of the other injection openings (115).

6. Fuel injection valve according to Claim 4, **characterized in that** all of the injection openings (115) arranged upstream of the valve needle tip (18) have the same diameter as the downstream injection opening (215).

7. Internal combustion engine having a combustion chamber (34) into which a glow plug (35) and a fuel injection valve (1) having the features of Claim 1 project such that the fuel discharged from the fuel injection valve (1) can ignite in the combustion chamber (34),
**characterized in that**
the fuel jet discharged from the injection opening (215) arranged downstream of the valve needle tip (18) is directed such that the fuel is introduced into the vicinity of the glow plug (35) and thus forms an ignition jet.

## Revendications

1. Soupape d'injection de carburant pour moteurs à combustion interne, comprenant un corps de soupape (5), dans lequel est réalisé un espace de pression (7) qui est limité à une extrémité par un siège de soupape conique (13) au niveau duquel se raccorde un trou borgne (14) et comprenant une aiguille de soupape (10) disposée de manière déplaçable longitudinalement dans l'espace de pression (7), laquelle coopère par le biais d'une surface d'étanchéité de soupape (12) avec le siège de soupape conique (13) pour commander un flux de carburant hors de l'espace de pression (7) jusque dans des ouvertures d'injection (15 ; 115 ; 215) réalisées dans le corps de soupape (5), l'aiguille de soupape (10), lorsqu'elle est en appui contre le siège de soupape (13), pénétrant avec une pointe d'aiguille de soupape (18) dans le trou borgne (14),
**caractérisée en ce que**
l'ouverture d'entrée (216) d'une ouverture d'injection (215) est disposée en aval de la pointe d'aiguille de soupape (18) dans le trou borgne (14) et les ouvertures d'entrée (116) des autres trous d'injection (115) sont disposées en amont de la pointe d'aiguille de soupape (18) lorsque l'aiguille de soupape (10) est en appui contre le siège de soupape (13), l'ouverture d'injection (215) disposée en aval de la pointe d'aiguille de soupape (18) étant disposée de telle sorte que le point d'incidence d'un jet de carburant sortant de cette ouverture d'injection (215) sur un cercle imaginaire se situe à une distance déterminée (r) de l'axe médian de la soupape d'injection, sur lequel se situent également les points d'incidence de tous les autres jets de carburant sortant à travers les autres ouvertures d'injection (115).

2. Soupape d'injection de carburant selon la revendication 1, **caractérisée en ce que** toutes les ouvertures d'injection (15 ; 115 ; 215) sortent du trou borgne (14).

3. Soupape d'injection de carburant selon la revendication 1, **caractérisée en ce que** les ouvertures d'injection (115) disposées en amont de la pointe d'aiguille de soupape (18) sortent du siège de soupape (13).

4. Soupape d'injection de carburant selon la revendication 1, **caractérisée en ce que** les ouvertures d'injection (115) disposées en amont de la pointe d'aiguille de soupape (18) sont situées sur une surface conique commune.

5. Soupape d'injection de carburant selon la revendication 1, **caractérisée en ce que** toutes les ouvertures d'injection (115 ; 215) présentent une forme cylindrique avec un diamètre, l'ouverture d'injection (215) disposée en aval de la pointe d'aiguille de soupape (18) présentant un diamètre différent des diamètres des autres ouvertures d'injection (115).

6. Soupape d'injection de carburant selon la revendication 4, **caractérisée en ce que** toutes les ouvertures d'injection (115) disposées en amont de la pointe d'aiguille de soupape (18) présentent le même diamètre que l'ouverture d'injection (215) disposée en aval.

7. Moteur à combustion interne comprenant une chambre de combustion (34) dans laquelle pénètrent une bougie de préchauffage (35) et une soupape d'injection de carburant (1) selon les caractéristiques de la revendication 1, de telle sorte que le carburant éjecté hors de la soupape d'injection de carburant (1) puisse être allumé dans la chambre de combustion (34),
**caractérisé en ce que**
le jet de carburant qui est éjecté par l'ouverture d'injection (215) disposée en aval de la pointe d'aiguille de soupape (18) est orienté de telle sorte que le carburant soit amené à proximité de la bougie de préchauffage (35) et forme ainsi un jet d'allumage.
